# EUROPÄISCHE PATENTANMELDUNG

(11) **EP 1 759 579 A1**
(43) Veröffentlichungstag der Anmeldung: **07.03.2007**
(21) Anmeldenummer: 05019166.7
(22) Anmeldetag: 02.09.2005
(51) Int. Cl.: A01G 23/095

(54) **Entastungsvorrichtung**

(71) Anmelder: LASCO Heutechnik GmbH, 5221 Lochen (AT)
(72) Erfinder: Landrichinger, Johann, 5221 Lochen (AT)
(74) Vertreter: Daub, Thomas

(57) **Zusammenfassung**

Die Erfindung geht aus von einer Entastungsvorrichtung mit einer insbesondere fahrbaren Standeinrichtung (2) zur Lagerung auf einem Boden (4), einem Trennmittel (34) mit einer Trennrichtung (40) und einem Bewegungsmittel zur Bewegung des Trennmittels (34) relativ zur Standeinrichtung (2).

Um ein einfaches Abtrennen von Ästen von stehenden Bäumen zu erlauben, wird vorgeschlagen, dass das Trennmittel (34) durch das Bewegungsmittel relativ zur Standeinrichtung (2) mit einer Bewegungsrichtung in Trennrichtung (40) und längs zu einer Stammrichtung an einem Baum entlang führbar ist.

## Beschreibung

### Stand der Technik

Die Erfindung geht aus von einer Entastungsvorrichtung nach dem Oberbegriff des Anspruchs 1.

Es sind Baumschneidemaschinen, so genannte "Harvester", bekannt, beispielsweise aus der US 4,779,654, mit denen Bäume gefällt, umgelegt und entastet werden können. Bei solchen Maschinen wird der Baum zuerst gefällt und dann werden die Äste vom Stamm abgetrennt.

Der Erfindung liegt die Aufgabe zugrunde, eine Entastungsvorrichtung anzugeben, mit der Äste von einem lebenden Baum abgetrennt werden können, ohne den Baum fällen zu müssen. Diese Aufgabe wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Entastungsvorrichtung mit einer insbesondere fahrbaren Standeinrichtung zur Lagerung auf einem Boden, einem Trennmittel mit einer Trennrichtung und einem Bewegungsmittel zur Bewegung des Trennmittels relativ zur Standeinrichtung.

Es wird vorgeschlagen, dass das Trennmittel durch das Bewegungsmittel relativ zur Standeinrichtung mit einer Bewegungsrichtung in Trennrichtung und längs zu einer Stammrichtung an einem Baum entlang führbar ist. Hierdurch können Äste an einem ungefällten Baum einfach entfernt werden, insbesondere unabhängig davon, ob der Baum senkrecht steht oder beispielsweise bis zu einer Horizontalen krumm gewachsen ist. Das Trennmittel kann eine Kreissäge oder einzelne Messer umfassen, wobei besonders vorteilhaft eine Kettensäge ist. Die parallele Führung entlang des Stamms kann durch eine Schwenkbewegung erfolgen, insbesondere um eine Schwenkachse quer zur Stammrichtung. Vorteilhafterweise ist das Trennmittel durch das Bewegungsmittel mit einer Bewegungsrichtung in Trennrichtung an einem stehenden, also zumindest im Wesentlichen senkrecht zum Boden gewachsenen Baum entlang führbar.

In einer weiteren vorteilhaften Ausgestaltung der Erfindung weist das Trennmittel einen aus einem Gehäuse hervorstehenden länglichen Trennarm auf. Durch einen solchen Trennarm, insbesondere ein Schwert einer Kettensäge, können Äste besonders einfach vom Stamm eines Baums abgetrennt werden. Das Gehäuse kann zum Schutz eines Antriebs des Trennmittels dienen und kann zusätzlich als Anschlag für einen abzusägenden Ast verwendet werden.

In bevorzugter Weise ist das Trennmittel durch das Bewegungsmittel zum Trennen parallel zum Boden bewegbar. Hierdurch können Äste auch bereits von einem gefällten Baum oder von einem sehr schräg gewachsenen Baum vom Stamm abgetrennt werden. Besonders einfach erreichbar sind Äste eines beispielsweise gefällten Baums, wenn das Trennmittel zum Trennen durch eine Schwenkbewegung um eine horizontale Achse vorgesehen ist. Das Trennmittel kann von oben an den Stamm geführt und anschließend parallel zum Boden bewegt werden.

Eine einfache Positionierung des Trennmittels an einem beispielsweise schwer zu erreichenden Ast ist möglich, wenn das Trennmittel an einem relativ zur Standeinrichtung dreidimensional beweglichen Tragarm angeordnet ist. Umfasst das Bewegungsmittel zusätzlich eine am Tragarm angeordnete, dreidimensional bewegliche, maschinell ansteuerbare Bewegungseinheit zur Erzielung eines weiteren Bewegungsfreiheitsgrads des Trennmittels, so kann die Trennrichtung im Wesentlichen unabhängig von einer Stellung des Tragarms ausgewählt werden. Hierdurch können Äste auch an schwer erreichbaren Stellen besonders einfach geschnitten werden. Außerdem kann ein beispielsweise nahe an einem Gebäude stehender Baum, der nicht als Ganzes gefällt werden kann, durch horizontale und vertikale Schnitte einfach und schnell Stück für Stück zerlegt werden. Vorteilhafterweise ist das Trennmittel durch die Bewegungseinheit um eine horizontale Achse schwenkbar, wodurch die Bewegungseinheit besonders einfach gehalten sein kann.

In einer weiteren Ausführungsvariante weist das Bewegungsmittel eine am Tragarm angeordnete und dreidimensional bewegliche Bewegungseinheit zur Erzielung zumindest zweier weiterer Bewegungsfreiheitsgrade des Trennmittels auf. Hierdurch kann die Trennrichtung - und gegebenenfalls eine Schwenkbewegung der Trennrichtung - manuell oder maschinell ausgewählt und hierdurch ein sehr richtungsvariables und einfaches Trennen ermöglicht werden.
Eine Steuerung der Entastungsvorrichtung kann erleichtert werden, wenn das Bewegungsmittel eine Bewegungseinheit zur translatorischen Bewegung des Trennmittels relativ zur Standeinrichtung aufweist. Das Trennmittel kann beispielsweise an einen Baum herangeführt werden, ohne dass die Standeinrichtung bewegt werden müsste.

Die Entastungsvorrichtung ist vorteilhaft auch dadurch weitergebildet, dass das Bewegungsmittel eine Bewegungseinheit zur Bewegung der Trennrichtung aus einer vertikalen in eine horizontale Richtung aufweist. So kann beispielsweise erst ein großer Ast vom Baum geschnitten und im gleichen Arbeitsgang können in einer horizontalen Trennrichtung kleinere Äste vom am Boden liegenden großen Ast entfernt werden. Die vertikale und horizontale Richtung beziehen sich auf die horizontale Ausrichtung des Bodens. Die Trennrichtung ist durch das Bewegungsmittel vorteilhafterweise um eine horizontale Achse verschwenkbar, wodurch das Bewegungsmittel besonders einfach gehalten werden kann.

Die Entastungsvorrichtung umfasst in einer weiteren vorteilhaften Ausgestaltung der Erfindung ein Haltemittel zum Halten von vom Trennmittel abgetrennten Gegenständen. Hierdurch können herabgefallene Äste von der Entastungsvorrichtung aus dem Weg geräumt werden, so dass die Standeinrichtung möglichst frei bewegbar ist. Zweckmäßigerweise ist das Haltemittel ein Greifer. Vorteilhafterweise ist das Haltemittel relativ zur Standeinrichtung dreidimensional beweglich, wodurch ein einfaches Halten beziehungsweise Greifen auch schwer zugänglicher Äste einfach erreichbar ist. Insbesondere beim Abtrennen großer Äste ist es vorteilhaft, wenn das Haltemittel zum Halten eines abzutrennenden Gegenstands während eines Abtrennvorgangs vorgesehen ist. Ein Schnitt durch den Ast kann vollständig ausgeführt werden, ohne dass der Ast herunterfällt und beispielsweise durch ein Mitreißen von Rinde den Stamm beschädigt. Außerdem kann ein schwerer Ast gezielt an einem gewünschten Ort abgelegt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und aus verschiedenen Ausführungsbeispielen zu sinnvollen weiteren Kombinationen zusammenfassen.

Es zeigen:
- Fig. 1: eine Entastungsvorrichtung mit einem Trennmittel an einem Tragarm in einer schematischen, seitlichen Darstellung,
- Fig. 2: einen Ausschnitt des Tragarms mit zwei daran befestigten Bewegungseinheiten und dem Trennmittel, jedoch ohne Haltemittel,
- Fig. 3: das Trennmittel aus Figur 2 in einer um 90° verschwenkten Position,
- Fig. 4: den Tragarm aus Figur 2 in einer schematischen Darstellung von oben,
- Fig. 5: das Trennmittel in einer im Vergleich zu Figur 4 um 90° verschwenkten Position,
- Fig. 6: einen Ausschnitt des Tragarms mit dem Trennmittel zum Schneiden parallel zum Boden,
- Fig. 7: das relativ zum Tragarm verschwenkte Trennmittel beim Schneiden parallel zum Boden,
- Fig. 8: eine perspektivische Ansicht auf einen alternativen Tragarm und das Trennmittel mit einem Schutzgehäuse,
- Fig. 9: eine perspektivische Vorderansicht des größten Teils einer Entastungsvorrichtung,
- Fig. 10: einen Ausschnitt einer weiteren alternativen Entastungsvorrichtung mit einem maschinell positionierbaren Haltemittel in Form eines Greifers und
- Fig. 11: den Ausschnitt aus der Entastungsvorrichtung aus Figur 10 in einer Ansicht von oben.

### Beschreibung der Ausführungsbeispiele

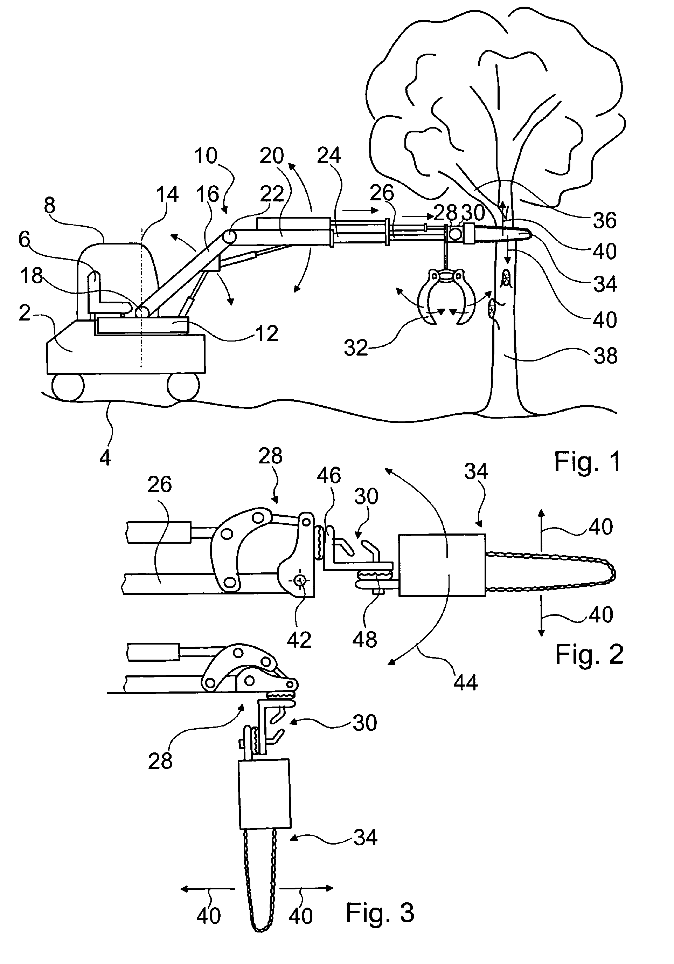

Figur 1 zeigt eine Entastungsvorrichtung mit einer als Fahrzeug ausgeführten Standeinrichtung 2 in einer schematischen Darstellung von der Seite. Die Standeinrichtung 2 steht auf einem Boden 4 und trägt einen Sitz 6 für einen Bediener, einen Schutzkäfig 8 und einen Tragarm 10. Der Tragarm 10 ist auf einer Plattform 12 befestigt, die um eine senkrechte Achse 14 drehbar gelagert ist. Der Tragarm 10 umfasst einen ersten Abschnitt 16, der durch eine hydraulische Bewegungseinheit um ein schematisch dargestelltes Gelenk 18 um eine horizontale Drehachse verschwenkbar ist. Ein zweiter Abschnitt 20 ist durch eine weitere Bewegungseinheit um ein weiteres Gelenk 22 relativ zum ersten Abschnitt 16 um eine weitere horizontale Achse schwenkbar. Zwei weitere Abschnitte 24, 26 sind jeweils durch eine eigene hydraulische Bewegungseinheit translatorisch relativ zum Abschnitt 20 bewegbar. Die drei Abschnitte 20, 24, 26 und zwei Bewegungseinheiten 28, 30 sind durch die Verschwenkbarkeit um die beiden horizontalen Achsen und die senkrechte Achse 14 dreidimensional beweglich relativ zur Standeinrichtung 2. Ebenso wie die Bewegungseinheiten 28, 30 ist ein Haltemittel 32 in Form eines Greifers am vierten Abschnitt 26 des Tragarms 10 befestigt und hängt vom Ende des Abschnitts 26 nach unten. Durch eine hydraulische Einrichtung können Greifzangen des Haltemittels 32 maschinell geöffnet und geschlossen werden. An den Bewegungseinheiten 28, 30 ist ein Trennmittel 34 in Form einer Kettensäge befestigt.

Zum Abschneiden eines Asts 36 von einem Stamm 38 eines Baums wird die Standeinrichtung 2 in einiger Entfernung vom Baum abgestellt. Das Trennmittel 34 wird unterhalb oder oberhalb des Asts 36 positioniert und kann nun durch ein Verschwenken des ersten Abschnitts 16 oder des zweiten Abschnitts 20 relativ zum ersten Abschnitt 16 in einer Trennrichtung 40 nach oben beziehungsweise nach unten bewegt werden, wodurch der Ast 36 vom Stamm 38 abgetrennt werden kann. Der abgetrennte Ast 36 kann dann vom Haltemittel 32 gegriffen und an einen gewünschten Ort abgelegt werden. In einer dritten Möglichkeit ist das Trennmittel 34 zum Abschneiden des Asts 36 um eine dritte horizontale Achse 42 schwenkbar, die durch die Bewegungseinheit 28 verläuft und in Figur 2 dargestellt ist.

Figur 2 zeigt das von der Standeinrichtung 2 abgewandte Ende des Tragarms 10 mit den daran befestigten Bewegungseinheiten 28, 30 und dem Trennmittel 34 ohne das Haltemittel 32, wobei es selbstverständlich möglich ist, die Entastungsvorrichtung auch tatsächlich ohne das Haltemittel 32 auszuführen. Wie durch Pfeile 44 dargestellt, ist das Trennmittel 34 um die horizontale Achse 42 durch eine Hydraulik der Bewegungseinheit 28 nach oben oder unten verschwenkbar und der Ast 36 kann durch diese Bewegung vom Stamm 38 abgesägt werden.

Figur 3 zeigt das Trennmittel 34 senkrecht nach unten verschwenkt. In dieser Position kann das Trennmittel 34 beispielsweise mit einer horizontalen Trennrichtung 40 entlang eines Stamms eines gefällten Baums geführt werden und dessen seitlich abstehende Äste können entfernt werden. Hierbei kann die Bewegung des Trennmittels 34 in Trennrichtung 40 durch eine translatorische Bewegung der Abschnitte 24, 26 oder durch eine Schwenkbewegung um die horizontale Achse 42 erfolgen.

Durch die Bewegungseinheit 30 ist eine manuelle Voreinstellung der Trennrichtungen 40 in einer besonders variablen Weise möglich. Die Bewegungseinheit 30 umfasst zwei manuelle Stelleinheiten 46, 48, durch die das Trennmittel 34 um eine horizontale beziehungsweise vertikale Achse drehbar ist. Durch ein Drehen des Trennmittels 34 um die horizontale Drehachse der Stelleinheit 46 kann die in Figur 2 senkrecht dargestellte Trennrichtung beispielsweise in die Horizontale und zurück gedreht werden.

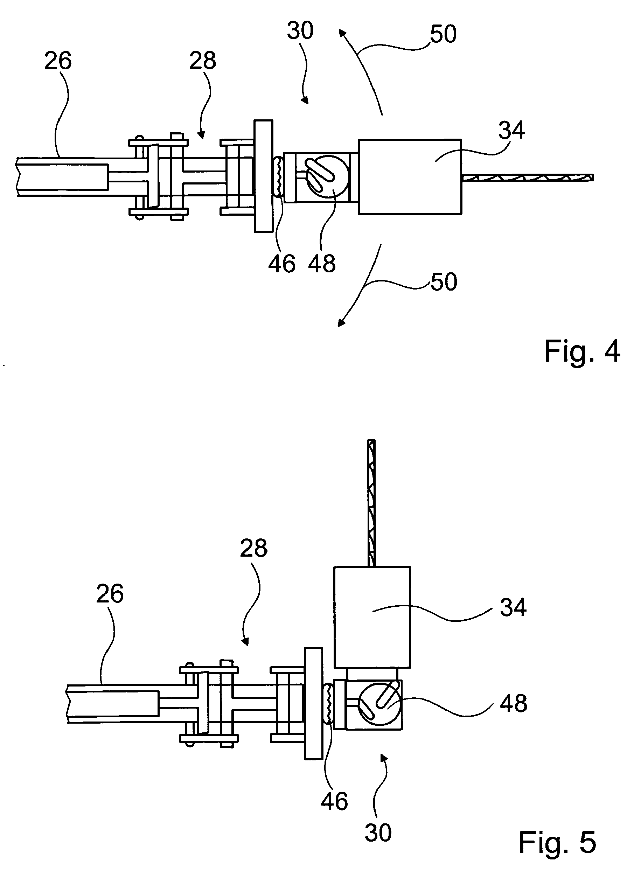

Der in Figur 2 dargestellte Ausschnitt der Entastungsvorrichtung ist in Figur 4 in einer schematischen Ansicht von oben gezeigt. Mit Hilfe der Stelleinheit 48 kann das Trennmittel 34 um die vertikale Achse der Stelleinheit 48, wie durch die Pfeile 50 dargestellt, verschwenkt werden, beispielsweise in eine Position, wie in Figur 5 dargestellt. In dieser Position kann die Säge des Trennmittels 34 quer zur Standeinrichtung 2 beispielsweise nach oben und unten geführt und in Richtung der Standeinrichtung 2 weisende Äste können vom Stamm 38 abgetrennt werden.

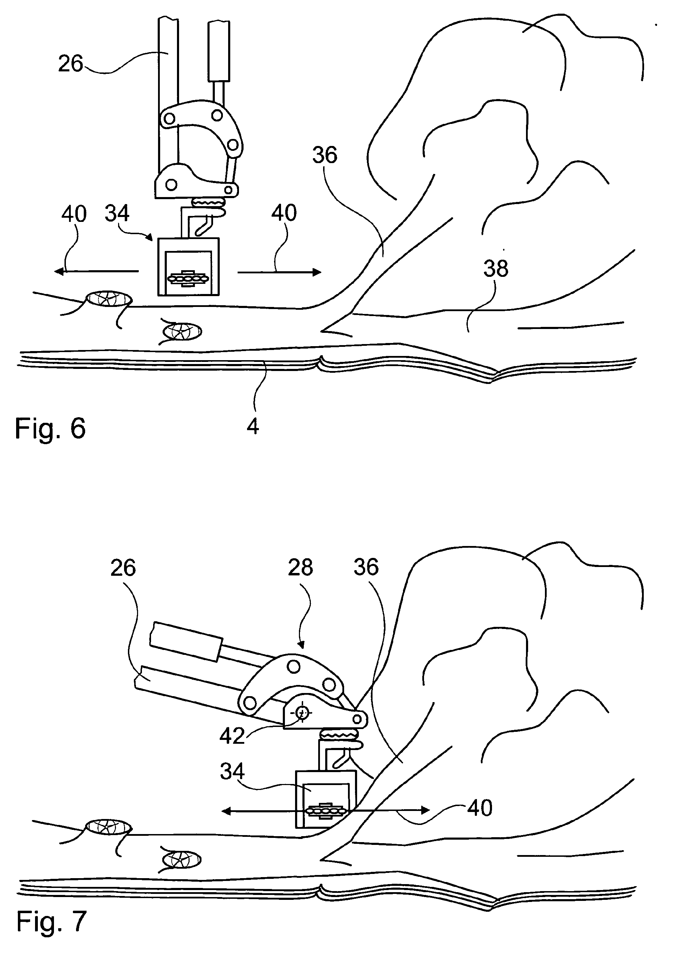

Figur 6 zeigt einen am Boden 4 liegenden gefällten Baum mit einem abzutrennenden Ast 36, den Abschnitt 26 des Tragarms 10 und das Trennmittel 34. Das Trennmittel 34 ist relativ zum Abschnitt 26 ähnlich wie in Figur 5 positioniert, jedoch um 180° um die Achse der Stelleinheit 48 verschwenkt. Durch ein Verschwenken des Abschnitts 26 um die horizontale Achse des Gelenks 22 des Tragarms 10 kann das Trennmittel 34 in Trennrichtung 40 und parallel zum Boden geführt und der Ast 36 kann in einfacher Weise vom Stamm 38 abgetrennt werden. In Figur 6 ist der Abschnitt 26 senkrecht nach unten gerichtet, da der abzutrennende Ast 36 recht nah an der Standeinrichtung 2 gelegen ist. Ist der Ast 36 weiter weg von der Standeinrichtung 2, kann gegebenenfalls eine senkrechte Anordnung des Abschnitts 26 nicht beibehalten werden.

In einem solchen Fall kann der Abschnitt 26, wie in Figur 7 gezeigt, um die horizontale Achse des Gelenks 22 verschwenkt, eventuell translatorisch von der Standeinrichtung 2 entfernt und zum abzutrennenden Ast 36 geführt werden. Um auch in dieser fast waagerechten Position des Abschnitts 26 eine horizontale und parallel zum Boden 4 geführte Trennrichtung 40 zu erreichen, wird das Trennmittel 34 um die horizontale Achse 42 der Bewegungseinheit 28 verschwenkt, bis die Trennrichtung 40 horizontal ausgerichtet ist. Nun kann das Trennmittel 34 beispielsweise durch eine translatorische Bewegung der Abschnitte 24, 26 und eine leichte Schwenkbewegung um die horizontale Achse des Gelenks 22 in Trennrichtung 40 geführt und der Ast 36 abgesägt werden. Aus Figur ist leicht zu ersehen, dass die Trennrichtung 40 durch die Bewegungseinheit 28 einfach von der horizontalen Richtung wie in Figur 7 in eine vertikale Richtung verschwenkt werden kann. So können einfach und schnell abwechselnd Äste von einem Baum abgetrennt und der Stamm von oben nach unten gekappt werden, beispielsweise wenn der Baum nicht im Ganzen gefällt werden kann.

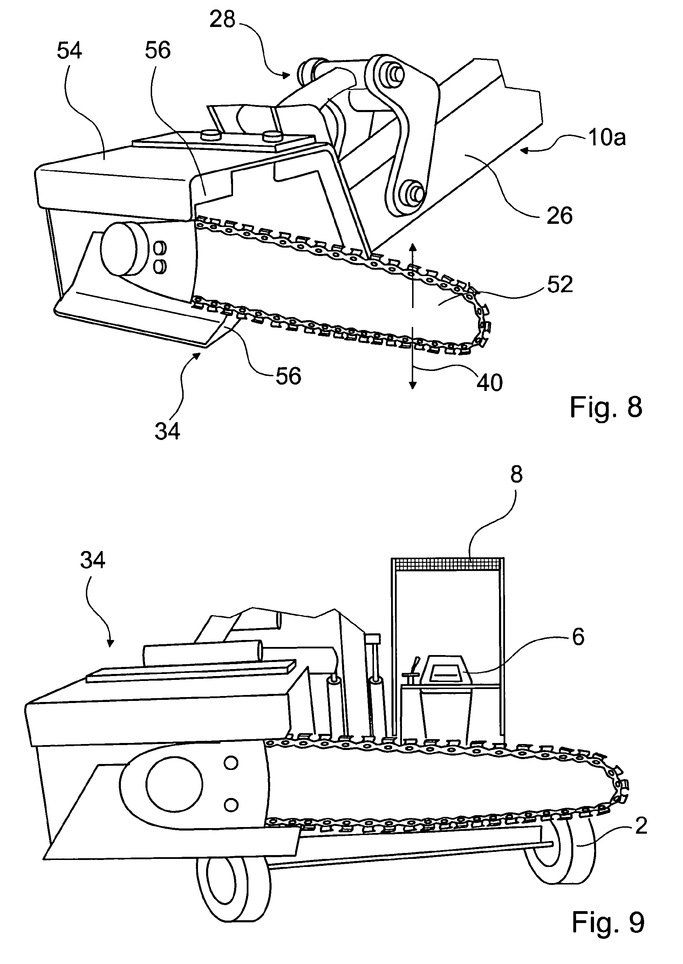

Figur 8 zeigt die Trenneinrichtung 34 an einem Abschnitt 26 eines etwas modifizierten Tragarms 10a einer alternativen Entastungsvorrichtung. Diese gleicht im Wesentlichen der Entastungsvorrichtung 10 aus den Figuren 1 bis 7, weist jedoch kein Haltemittel 32 und keine Bewegungseinheit 30 auf. Im Übrigen ist diese Entastungsvorrichtung und insbesondere das Trennmittel 34 gleich ausgeführt wie die oben beschriebene Entastungsvorrichtung, weshalb gleiche Bauteile mit gleichen Bezugszeichen beziffert sind. Das Trennmittel 34 ist relativ zum Abschnitt 26 nur um die in Figur 8 nicht dargestellte horizontale Achse 42 schwenkbar.

Das Trennmittel 34 umfasst eine Kettensäge mit einem Trennarm 52 in Form eines Sägeschwerts, dessen Blattebene und Längsrichtung die Trennrichtung 40 des Trennmittels 34 definieren. Die Trennrichtung 40 ist in der Blattebene und senkrecht zur Längsrichtung des Sägeschwerts ausgerichtet. Ein hydraulischer Antrieb der Kettensäge ist von einem Gehäuse 54 umgeben, aus dem die Kettensäge herausragt. Das Gehäuse 54 schützt den Abtrieb und weist zudem zwei Anschläge 56 auf, an die ein angesägter und von der Kettensäge zum Gehäuse 54 gezogener Ast 36 angelegt werden und hierdurch rüttelfrei abgesägt werden kann. Figur 9 zeigt eine perspektivische Darstellung eines Ausschnitts der Entastungsvorrichtung aus Figur 8 von vorn.

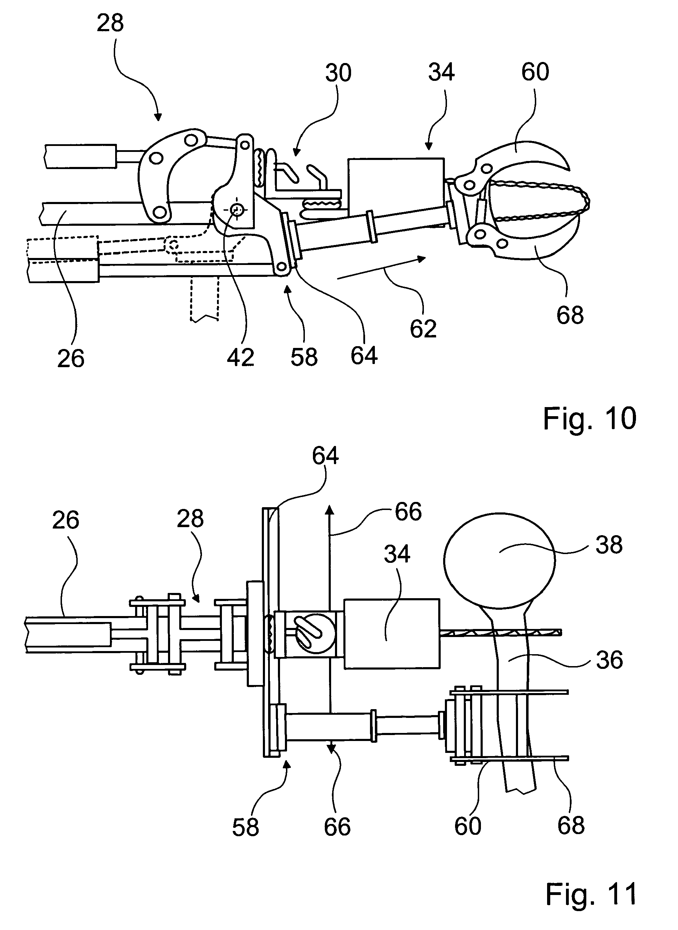

Ein weiteres Ausführungsbeispiel einer Entastungsvorrichtung ist in den Figuren 10 und 11 gezeigt. Wiederum sind im Wesentlichen gleich bleibende Bauteile mit den gleichen Bezugszeichen beziffert. Bezüglich gleich bleibender Merkmale und Funktionen kann auf die Beschreibung zu den Ausführungsbeispielen der Figuren 1 bis 7 verwiesen werden, wobei sich die nachfolgende Beschreibung im Wesentlichen auf die Unterschiede zu diesen Ausführungsbeispielen beschränkt. Zusätzlich zu den beiden Bewegungseinheiten 28, 30 ist an dem von der Standeinrichtung 2 weg weisenden Ende des Abschnitts 26 des Tragarms 10 eine weitere Bewegungseinheit 58 zum Bewegen eines Haltemittels 60 in Form eines Greifers angeordnet. Auf diese Weise ist das Haltemittel 60 ebenfalls um die horizontale Achse 42 durch einen hydraulischen Antrieb schwenkbar und außerdem durch einen weiteren hydraulischen Antrieb, wie durch den Pfeil 62 dargestellt, translatorisch bewegbar. Die Bewegungseinheit 58 erlaubt außerdem eine translatorische Bewegung quer zum Abschnitt 26, wie durch Pfeile 66 in Figur 11 angedeutet ist. Hierzu ist das Haltemittel 60 an einer Schiene 64 translatorisch verschiebbar. Zum Absägen des Asts 36 vom Stamm 38 wird das Trennmittel 34, wie zu Figur 1 beschrieben, an den Ast 36 herangeführt. Anschließend wird das Haltemittel 60 zuerst translatorisch in Richtung der Pfeile 66 auf die gewünschte Seite des Trennmittels 34 bewegt und anschließend um die Achse 42 verschwenkt und translatorisch in Richtung des Pfeils 62 bewegt, bis es den Ast 36 umschließend greifen kann. Nach dem Greifen des Asts 36 wird dieser abgesägt und bleibt vom Haltemittel 60 gehalten. Nun kann der Ast 36 durch das Haltemittel abgelegt werden, beispielsweise, indem das Haltemittel 60 um die Achse 42 nach unten verschwenkt wird und bewegliche Greifzangen 68 des Haltemittels 60 geöffnet werden. Die nach unten ausgerichtete Position des Haltemittels 60 ist gestrichelt in Figur 10 angedeutet. In dieser Position können auch heruntergefallene Äste oder Gegenstände vom Haltemittel 60 gegriffen und beiseite geräumt werden, ohne dass das Trennmittel 34 im Weg ist. Um das Trennmittel 34 weiter vom Haltemittel 60 zu entfernen, kann dieses zusätzlich durch die Bewegungseinheit 28 nach oben verschwenkt werden, bis das Trennmittel 34 und das Haltemittel 60 beispielsweise antiparallel zueinander ausgerichtet sind.

### Bezugszeichen

- 2: Standeinrichtung
- 4: Boden
- 6: Sitz
- 8: Schutzkäfig
- 10: Tragarm
- 10a: Tragarm
- 12: Plattform
- 14: Achse
- 16: Abschnitt
- 18: Gelenk
- 20: Abschnitt
- 22: Gelenk
- 24: Abschnitt
- 26: Abschnitt
- 28: Bewegungseinheit
- 30: Bewegungseinheit
- 32: Haltemittel
- 34: Trennmittel

- 36: Ast
- 38: Stamm
- 40: Trennrichtung
- 42: Achse
- 44: Pfeil
- 46: Stelleinheit
- 48: Stelleinheit
- 50: Pfeil
- 52: Trennarm
- 54: Gehäuse
- 56: Anschlag
- 58: Bewegungseinheit
- 60: Haltemittel
- 62: Pfeil
- 64: Schiene
- 66: Pfeil
- 68: Greifzange

## Patentansprüche

1. Entastungsvorrichtung mit einer insbesondere fahrbaren Standeinrichtung (2) zur Lagerung auf einem Boden (4), einem Trennmittel (34) mit einer Trennrichtung (40) und einem Bewegungsmittel zur Bewegung des Trennmittels (34) relativ zur Standeinrichtung (2),
**dadurch gekennzeichnet, dass** das Trennmittel (34) durch das Bewegungsmittel relativ zur Standeinrichtung (2) mit einer Bewegungsrichtung in Trennrichtung (40) und längs zu einer Stammrichtung an einem Baum entlang führbar ist.

2. Entastungsvorrichtung nach Anspruch 1,
**dadurch gekennzeichnet, dass** das Trennmittel (34) durch das Bewegungsmittel mit einer Bewegungsrichtung in Trennrichtung (40) an einem stehenden Baum entlang führbar ist.

3. Entastungsvorrichtung nach Anspruch 1 oder 2,
**dadurch gekennzeichnet, dass** das Trennmittel (34) einen aus einem Gehäuse (54) hervorstehenden länglichen Trennarm (52) aufweist.

4. Entastungsvorrichtung nach einem der vorhergehenden Ansprüche, **dadurch gekennzeichnet,**
**dass** das Trennmittel (34) durch das Bewegungsmittel zum Trennen parallel zum Boden (4) bewegbar ist.

5. Entastungsvorrichtung nach einem der vorhergehenden Ansprüche, **dadurch gekennzeichnet, dass** das Trennmittel (34) zum Trennen durch eine Schwenkbewegung um eine horizontale Achse (42) vorgesehen ist.

6. Entastungsvorrichtung nach einem der vorhergehenden Ansprüche, **dadurch gekennzeichnet, dass** das Trennmittel (34) an einem relativ zur Standeinrichtung (2) dreidimensional beweglichen Tragarm (10, 10a) angeordnet ist.

7. Entastungsvorrichtung nach Anspruch 6, **dadurch gekennzeichnet, dass** das Bewegungsmittel eine am Tragarm (10, 10a) angeordnete, dreidimensional bewegliche, maschinell ansteuerbare Bewegungseinheit (28) zur Erzielung eines weiteren Bewegungsfreiheitsgrads des Trennmittels (34) aufweist.

8. Entastungsvorrichtung nach Anspruch 7, **dadurch gekennzeichnet, dass** das Trennmittel (34) durch die Bewegungseinheit (28) um eine horizontale Achse (42) schwenkbar ist.

9. Entastungsvorrichtung nach einem der Ansprüche 6 bis 8, **dadurch gekennzeichnet, dass** das Bewegungsmittel eine am Tragarm (10) angeordnete und dreidimensional bewegliche Bewegungseinheit (30) zur Erzielung zumindest zweier weiterer Bewegungsfreiheitsgrade des Trennmittels (34) aufweist.

10. Entastungsvorrichtung nach einem der vorhergehenden Ansprüche, **dadurch gekennzeichnet, dass** das Bewegungsmittel eine Bewegungseinheit zur translatorischen Bewegung des Trennmittels (34) relativ zur Standeinrichtung (2) aufweist.

11. Entastungsvorrichtung nach einem der vorhergehenden Ansprüche, **dadurch gekennzeichnet, dass** das Bewegungsmittel eine Bewegungseinheit (28, 30) zur Bewegung der Trennrichtung (40) aus einer vertikalen in eine horizontale Richtung aufweist.

12. Entastungsvorrichtung nach einem der vorhergehenden Ansprüche, **dadurch gekennzeichnet, dass** die Trennrichtung (40) durch das Bewegungsmittel um eine horizontale Achse (42) verschwenkbar ist.

13. Entastungsvorrichtung nach einem der vorhergehenden Ansprüche, **gekennzeichnet durch** ein Haltemittel (32, 60) zum Halten von vom Trennmittel (34) abgetrennten Gegenständen.

14. Entastungsvorrichtung nach Anspruch 13, **dadurch gekennzeichnet, dass** das Haltemittel (32, 60) relativ zur Standeinrichtung (2) dreidimensional beweglich ist.

15. Entastungsvorrichtung nach Anspruch 13 oder 14, **dadurch gekennzeichnet, dass** das Haltemittel (32, 60) zum Halten eines abzutrennenden Gegenstands während eines Abtrennvorgangs vorgesehen ist.
